# FASCICULE DE BREVET EUROPEEN

(11) **EP 1 787 503 B1**
(45) Date de publication et mention de la délivrance du brevet: **18.08.2010**
(21) Numéro de dépôt: 06123930.7
(22) Date de dépôt: 13.11.2006
(51) Int. Cl.: A01B 49/06

(54) **Combiné de semis**
Bestellkombination
Sowing combination

(30) Priorité: 17.11.2005 FR 0553492
(43) Date de publication de la demande: 23.05.2007
(73) Titulaire: KUHN S.A., 67700 Saverne (FR)
(72) Inventeur: Kirch, Michel, 67260, Keskastel (FR)

(56) Documents cités:
- EP-A- 0 216 003
- EP-A- 0 264 621
- EP-A- 0 310 856
- US-A1- 2002 101 055

## Description

La présente invention se rapporte au domaine technique général des machines agricoles destinées aux opérations de travail du sol et de semis. Elle concerne une machine combinée, notamment un combiné de semis destiné à être accouplé à un tracteur via un système d'attelage trois points, ledit combiné de semis est constitué par la combinaison d'une machine de préparation d'un lit de semence comportant une unité de travail et un semoir, l'unité de travail porte intégralement le semoir au moyen d'un châssis, ledit semoir comportant une trémie et un dispositif d'implantation de la semence dans le sol.

Ces machines combinées, largement connues de l'homme du métier, permettent la préparation du lit de semence et simultanément l'introduction de semence dans le sol lors d'un unique passage sur une parcelle. Ainsi le débit des chantiers est augmenté en réduisant le nombre de passages successifs sur le champ pour réaliser les différentes opérations. La réduction du nombre de passages entraîne donc un gain de temps, une économie de carburant et une réduction des tassements indésirables du sol par les roues du tracteur.

D'une manière connue, le semoir est attelé à l'arrière du châssis de la machine de préparation d'un lit de semence au moyen d'un mécanisme d'accouplement du type attelage trois points. Ce mécanisme d'accouplement est souvent disposé à l'arrière du châssis entraînant un encombrement en longueur plus important de la machine combinée et de ce fait un éloignement du centre de gravité du combiné de semis par rapport au tracteur et une augmentation du porte-à-faux lors du relevage en fin de champ, ce qui a pour effet de délester considérablement les roues avant du tracteur. Seuls des tracteurs de puissances élevées peuvent donc être utilisés pour ce genre de combinés de semis. Cependant, ces gros tracteurs ne sont pas seulement très onéreux, ils sont aussi très lourds et tassent donc trop le sol sur leur passage entraînant une levée non homogène de la semence.

Dans des terres humides à l'automne, les conditions pour utiliser une machine combinée sont peu favorables. L'agriculteur aura alors tendance à adapter son attelage aux conditions du sol pour ne pas risquer de s'embourber dans la parcelle lorsque les conditions de portance sont limites. Le combiné de semis étant une combinaison de différents outils, il pourra décrocher et utiliser uniquement l'outil correspondant au travail à effectuer. Pour l'opération de préparation du sol, il utilisera la machine de préparation du lit de semence sans le semoir. Lorsque la terre sera ressuyée, il passera alors seulement avec le semoir pour implanter les graines.

Pour limiter le porte-à-faux lors du relevage, certains combinés de semis comportent un triangle d'attelage rapide. Ce triangle d'attelage rapide est directement prévu sur le châssis de la machine de préparation du lit de semence et sur le cadre du semoir. L'accouplement du semoir sur la machine de préparation du lit de semence via le triangle d'attelage rapide est sécurisé par un verrou. Le cadre du semoir connu supporte d'une part la trémie et d'autre part le dispositif d'implantation de la semence. Pour garder une profondeur de semis régulière, malgré la vitesse d'avancement, on cherche à limiter le pianotage du dispositif d'implantation de la semence dans le sol. On augmente donc la pression de terrage du dispositif d'implantation de la semence dans le sol pour éviter le pianotage. Avec une pression de terrage relativement élevée, le cadre du semoir ainsi que le verrou du triangle d'attelage rapide sont sollicités. Par ailleurs, le dispositif d'implantation de la semence dans le sol a tendance à soulever le cadre du semoir lorsque la pression de terrage est élevée ce qui peut provoquer un désaccouplement intempestif du semoir.

Les opérations d'accouplement et de désaccouplement des différents outils de la machine combinée pour s'adapter aux besoins et aux conditions du sol sont fastidieuses. Un autre combiné de semis est connu notamment par le prospectus AD-P Super de la société AMAZONE. Ce combiné de semis comporte une machine de préparation de la semence dans le sol avec une unité de travail et un semoir. L'unité de travail porte le semoir au moyen de son châssis. Comme le cadre du semoir est soudé sur le châssis, il n'est donc pas possible de démonter le semoir de l'unité de travail. Ce combiné connu comporte une herse rotative liée au moyen de bielles à l'avant de l'unité de travail. Avec ce combiné, il est possible de désaccoupler la herse rotative mais celle-ci ne peut alors pas réaliser un travail régulier car elle n'a pas d'organe qui réalise une référence pour le réglage de la profondeur de travail. L'agriculteur n'a donc pas la possibilité d'adapter cette machine combinée en fonction de ses besoins et des différentes conditions du sol.

La présente invention a pour but de remédier aux inconvénients précités et de proposer une machine combinée telle que décrite dans l'introduction qui présente une construction simple permettant une adaptation rapide aux diverses conditions du sol.

A cet effet, une importante caractéristique de l'invention consiste en ce que le semoir est lié audit châssis au moyen de deux mécanismes d'accouplement disposés de part et d'autre du châssis, chaque mécanisme d'accouplement comporte au moins un dispositif de guidage pour le positionnement du semoir sur le châssis, chaque mécanisme d'accouplement comporte un premier dispositif de guidage pour le positionnement latéral au moyen d'une paroi inclinée et un deuxième dispositif de guidage pour le positionnement longitudinal au moyen d'une butée avant et d'une butée arrière.

Ainsi, la position du semoir sur le châssis, de l'unité de travail est précise et rapide. De plus grâce à ce mécanisme d'accouplement, la machine combinée de travail du sol et de semis permet une adaptation rapide en fonction des travaux et des conditions du sol.

La forme particulière et la position de la trémie du semoir sur le châssis de l'unité de travail rendent la machine combinée particulièrement compacte. Le centre de gravité est ainsi proche du tracteur ce qui réduit le porte-à-faux en transport.

D'autres caractéristiques et avantages ressortiront des revendications et de la description ci-après d'un exemple de réalisation non limitatif de l'invention avec référence aux dessins annexés dans lesquels :
- la **figure 1** représente une vue générale isométrique d'une machine agricole combinée selon l'invention,
- la **figure 2** est une vue arrière de la machine combinée représentée à la figure 1,
- la **figure 3** illustre une vue suivant III de la figure 2,
- la **figure 4** représente une machine combinée selon un autre exemple de réalisation.

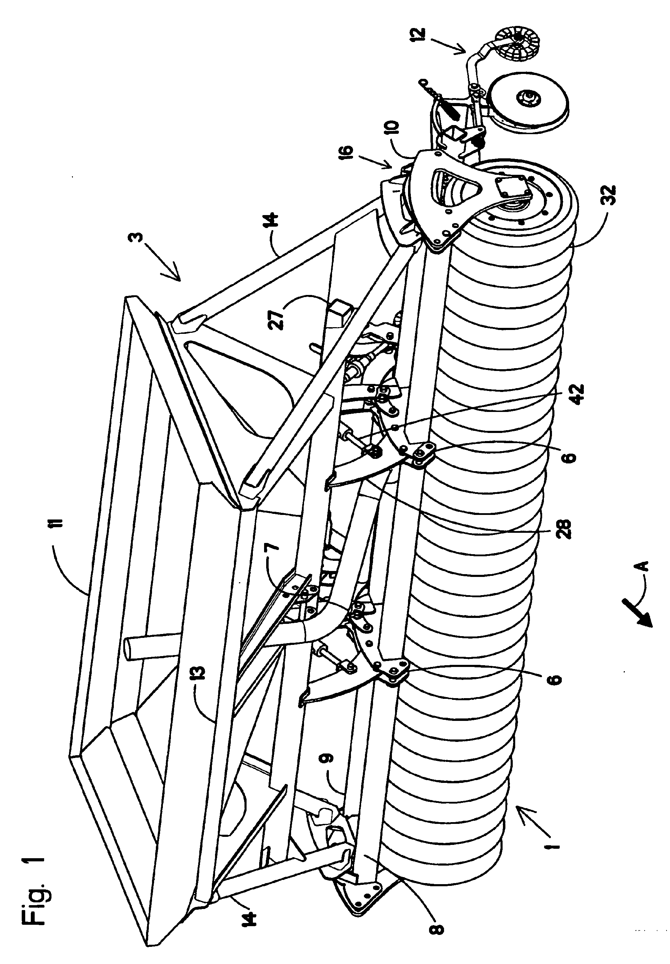

Telle que représentée sur la figure 1, la machine agricole selon l'invention est un combiné de semis. Ce combiné de semis est constitué par la combinaison d'une machine de préparation (1) d'un lit de semence comportant au moins une unité de travail (2) et un semoir (3). L'unité de travail (2) réalise une préparation du lit de semence via des organes de travail du sol tandis que le semoir (3) permet l'implantation de la semence dans le sol. La préparation du lit de semence et la mise en terre de la semence sont donc réalisées simultanément et en un seul passage avec ce combiné de semis. Pour ce faire, un tracteur déplace la machine suivant une direction et un sens d'avance indiqués par la flèche (A). Dans la suite de la description, les notions "avant" et "arrière", "devant" et "derrière" sont définies par rapport au sens d'avance (A) et les notions "droite" et "gauche" sont définies en regardant la machine de l'arrière dans ledit sens d'avance (A). Le combiné de semis de l'invention est destiné à être porté par le système d'attelage trois points (4) du tracteur au transport.

L'unité de travail (2) s'étend transversalement à la direction d'avance (A) et comporte un châssis (5) muni de deux points d'attelage inférieurs (6) et d'un point d'attelage supérieur (7) prévus pour son accouplement au système d'attelage trois points (4) du tracteur. Le système d'attelage (4) est actionné par le dispositif de relevage du tracteur pour que l'unité de travail (2) passe d'une position basse de travail à une position haute de transport et inversement. Dans l'exemple de réalisation représenté, le châssis (5) comporte deux poutres (8, 9) qui s'étendent transversalement à la direction d'avance (A) et qui sont disposées l'une (8) derrière l'autre (9). Les poutres (8, 9) sont reliées de part et d'autre à un bras latéral (10) respectif. Le châssis (5) de l'unité de travail (2) est destiné à porter intégralement le semoir (3).

Le semoir (3) représenté à la figure 1 est un semoir du type pneumatique. Ce semoir (3) comporte une trémie (11) à la base de laquelle est situé un dispositif de dosage (non représenté) permettant de doser la semence en provenance de la trémie (11). Le semoir (3) comporte aussi un dispositif d'implantation de la semence dans le sol (12) et un dispositif de soufflerie (non représenté) débitant un flux d'air pour véhiculer la semence de la trémie (11) vers le dispositif d'implantation de la semence dans le sol (12). Le semoir (3) s'appuie directement sur le châssis (5) de l'unité de travail (2) au moyen de son cadre (13).

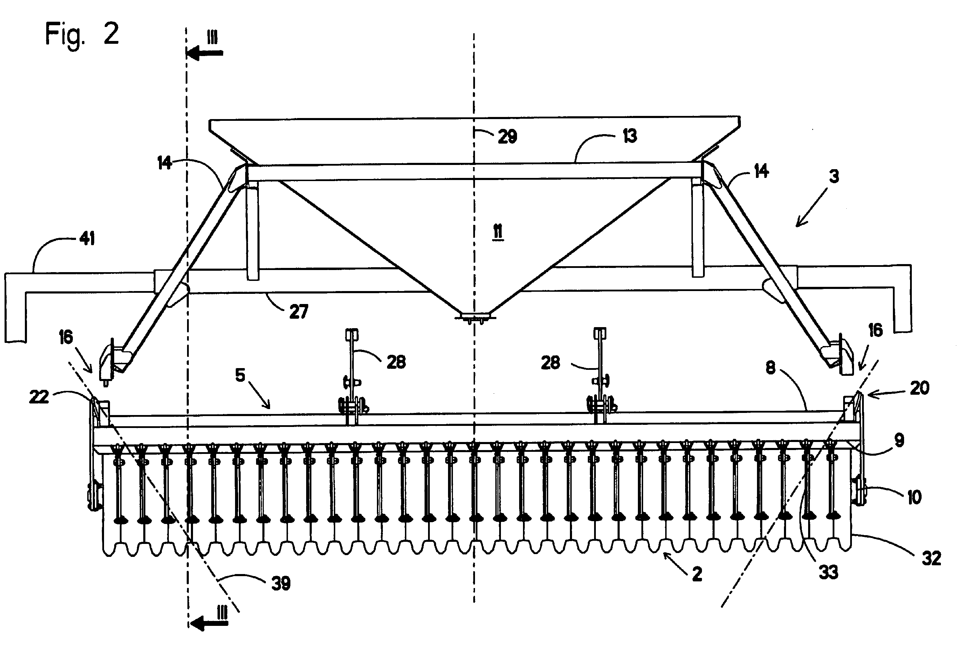

Les figures 1 et 2 montrent que le cadre (13) du semoir (3) est complété de chaque côté de la trémie (11) par une structure latérale (14). Chaque structure latérale (14) est destinée à venir s'appuyer directement sur le châssis (5) de l'unité de travail (2). On remarque aussi que le dispositif d'implantation de la semence dans le sol (12) est lié directement sur le châssis (5) de l'unité de travail (2) au moyen d'une structure de liaison (15). Le cadre (13) n'est donc pas sollicité par le dispositif d'implantation de la semence dans le sol (12). Grâce à cette structure de liaison (15), le dispositif d'implantation de la semence dans le sol (12) peut être déplacé soit vers le haut soit vers le bas suivant une direction sensiblement verticale afin d'adapter la profondeur de semis en fonction du type de semence. Le montage de la trémie (11) sur le châssis (5) et le montage du dispositif d'implantation de la semence dans le sol (12) directement à l'arrière du châssis (5) permettent d'obtenir une machine compacte. Ce combiné de semis permet ainsi la préparation du lit de semence et simultanément l'introduction de semence dans le sol lors d'un unique passage sur une parcelle.

Dans l'exemple de réalisation représenté sur les figures, l'unité de travail (2) est constituée d'un rouleau de rappuyage (32) du type rouleau sillonneur. Le châssis (5) porte ledit rouleau (32) au moyen de ses deux bras latéraux (10). Ce rouleau (32) s'étend à l'avant du dispositif d'implantation de la semence dans le sol (12) sensiblement perpendiculairement à la direction d'avance (A). Au travail, le semoir (3) repose sur le sol au moyen du rouleau de rappuyage (32). Ce rouleau (32) définit la profondeur de travail du dispositif d'implantation de la semence dans le sol (12). Étant donné que le poids du semoir (3) repose sur le rouleau de rappuyage (32), le lit de semence est bien rappuyé.

Ce rouleau (32) comporte des pneumatiques avec un profil en dôme qui sont enfilés sur un tube horizontal pour créer dans la terre des sillons pour y semer des graines, il rappuie le sol pour réduire l'évaporation. Comme la trémie s'appuie directement sur le châssis (5) du rouleau (32), le rouleau (32) bénéficie du poids de la trémie (11) avec la semence pour effectuer un bon travail de rappuyage.

Le rouleau (32) est utilisé avec des décrotteurs (33) disposés entre les profils en dôme. Ces décrotteurs (33) ont pour fonction d'éviter qu'une partie de la terre qui a été travaillée par le rouleau (32) n'adhère à son âme centrale. Ils sont avantageusement fixés sur la deuxième poutre (9) du châssis (5) de manière réglable pour un positionnement précis par rapport audit rouleau (32).

Selon une importante caractéristique de l'invention, le semoir (3) est lié au châssis (5) de l'unité de travail (2) au moyen d'au moins un mécanisme d'accouplement (16). Grâce à ce mécanisme d'accouplement (16), l'agriculteur peut rapidement et précisément adapter sa machine combinée en fonction de la nature et l'état du sol ainsi qu'en fonction du type de culture à implanter.

Dans l'exemple de réalisation des figures, le semoir (3) est lié au châssis (5) au moyen de deux mécanismes d'accouplement (16). Un mécanisme d'accouplement (16) est disposé de part et d'autre du châssis (5) au voisinage des bras latéraux (10). Pour réaliser la liaison entre le semoir (3) et le châssis (5), le châssis (5) présente, de part et d'autre, une surface d'appui (17) destinée à recevoir la structure latérale (14) respective du semoir (3). Lorsque la structure latérale (14) est placée sur la surface d'appui (17), le mécanisme d'accouplement (16) correspondant est verrouillé par l'intermédiaire d'un moyen de liaison. Ce moyen de liaison est constitué d'au moins une vis (18) et d'au moins un écrou permettant de sécuriser le mécanisme d'accouplement (16). Selon l'exemple de réalisation représenté, le moyen de liaison est constitué de deux vis (18) serrées dans un verrou (19). Le verrou (19) est logé sous chaque surface d'appui (17) et comporte deux trous taraudés destinés à recevoir les vis (18).

Grâce à ce mécanisme d'accouplement (16), l'agriculteur pourra adapter l'unité de travail (2) en fonction des conditions du sol. En effet, il pourra aisément adapter par exemple le type de rouleau de rappuyage en fonction de ses besoins. Ainsi il remplacera l'unité de travail (2) par une autre unité de travail équipée d'un rouleau de rappuyage du type packer. Ce type de rouleau est adapté pour travailler dans des types de terrain plus variés. Le rouleau packer est porté par un châssis (5) avec des surfaces d'appui (17). Cet exemple de réalisation n'est pas représenté.

Selon un autre exemple de réalisation non représenté, l'unité de travail (2) peut encore être remplacée par une unité de travail avec un châssis équipé d'au moins une rangée de dents régulièrement disposées sur toute la largeur de l'unité de travail. De préférence, le châssis est équipé de deux rangées de dents disposées l'une derrière l'autre. Le châssis sera alors équipé, en sus, d'au moins une roue de contrôle de la profondeur de semis.

Selon une autre importante caractéristique de l'invention, chaque mécanisme d'accouplement (16) comporte au moins un dispositif de guidage (20, 21) permettant d'assister le positionnement du semoir (3) sur le châssis (5) de l'unité de travail (2). Ce dispositif de guidage (20, 21) permet le guidage du positionnement de la structure latérale (14) sur la surface d'appui (17) lors de l'accouplement du semoir (3). D'une manière préférentielle, chaque mécanisme d'accouplement (16) comporte un premier dispositif de guidage (20) et un deuxième dispositif de guidage (21). Grâce à ces dispositifs de guidage (20, 21), l'agriculteur pourra rapidement et précisément accoupler le semoir (3) sur l'unité de travail (2). Le premier dispositif de guidage (20) assiste le positionnement latéral et le deuxième dispositif de guidage (21) assiste le positionnement longitudinal du semoir (3) sur la machine de préparation (1) d'un lit de semence.

En pratique, l'accouplement du semoir (3) sur le châssis (5) de l'unité de travail (2) comporte plusieurs étapes. Une étape préliminaire est nécessaire, c'est l'accrochage de l'unité de travail (2) au système d'attelage trois points (4) du tracteur. Dans une première étape, le semoir (3) est accouplé à l'unité de travail (2). Le semoir (3) est alors dans une position de remisage maintenu par des béquilles (41). Dans cette position de remisage, le semoir (3) est prêt à être accouplé au châssis (5) de l'unité de travail (2). L'agriculteur, dans son tracteur, aligne d'abord au mieux l'unité de travail (2) sous le semoir (3) dans une direction perpendiculaire à la direction d'avance (A). Le système d'attelage trois points (4) du tracteur est, pour cela, dans une position intermédiaire. Dans cette position intermédiaire, le châssis (5) passe sous le cadre (13) du semoir (3) et d'autre part l'unité de travail (2) est suffisamment relevée pour qu'elle ne touche pas le sol. Dans une deuxième étape, lorsque l'unité de travail (2) est placée sous le semoir (3), l'agriculteur positionne l'unité de travail (2) dans la direction d'avance (A) par rapport au semoir (3). Puis l'agriculteur lève progressivement le système d'attelage trois points (4) du tracteur jusqu'à ce que chaque structure latérale (14) se pose sur la surface d'appui (17) correspondante. Ainsi le positionnement en hauteur du châssis (5) sur le semoir (3) est réalisé en actionnant le dispositif de relevage du tracteur. Pour finir, chaque mécanisme d'accouplement (16) est verrouillé au moyen des vis (18) et du verrou (19). Par la présence des dispositifs de guidage (20, 21) de chaque mécanisme d'accouplement (16), on obtient un positionnement précis.

La figure 2 représente une vue arrière du combiné de semis (1) juste quelques instants avant l'accouplement du semoir (3) sur l'unité de travail (2). Sur cette figure, le positionnement du semoir (3) sur l'unité de travail (2) est pratiquement réalisé. Les structures latérales (14) ne reposent pas encore sur les surfaces d'appui (17). Le dispositif de relevage du tracteur auquel est lié l'unité de travail (2) via le système d'attelage trois points (4) est en position basse. Le tracteur n'est pas représenté sur la figure 2. Lorsque l'unité de travail (2) est à peu près alignée sous le semoir (3), le premier dispositif de guidage (20) assiste le positionnement du semoir (3) sur le châssis (5) dans une direction perpendiculaire à la direction d'avance (A) lors de la première étape. Ce premier dispositif de guidage (20) guide notamment le positionnement latéral du semoir (3) sur le châssis (5) et plus particulièrement, le positionnement de chaque structure latérale (14) sur la surface d'appui (17) correspondante. A cet effet, le premier dispositif de guidage (20) comporte une paroi inclinée (22) de l'extérieur vers l'intérieur sur laquelle vient glisser la structure latérale (14) au fur et à mesure qu'elle se rapproche de la surface d'appui (17). Le positionnement latéral se fait simultanément de part et d'autre du châssis (5) par la présence d'un premier dispositif de guidage (20) de chaque côté du châssis (5). Ensemble, les deux parois inclinées (22) forment avantageusement un premier Vé (39) qui se resserre vers le bas. Ces parois inclinées (22) sont symétriques par rapport au plan vertical médian (29) du châssis (5) de l'unité de travail (2). Ce premier Vé (39) est ouvert vers le haut et la pointe est dirigée vers le bas. L'angle d'ouverture du premier Vé (39) est compris entre 0° et 90° et d'une manière avantageuse entre 40° et 60°. Ainsi au fur et à mesure que la structure latérale (14) se rapproche de la surface d'appui (17), le jeu fonctionnel se réduit jusqu'à obtenir un positionnement précis. Pour le bon fonctionnement des dispositifs de guidage (20, 21), la partie inférieure de chaque structure latérale (14) présente une forme complémentaire à la surface d'appui (17). Lorsque le positionnement latéral est réalisé et juste avant que la structure latérale (14) vienne en contact avec la surface d'appui (17), c'est le positionnement longitudinal dans la direction d'avance (A) qui va être optimisé. On arrive à la deuxième étape.

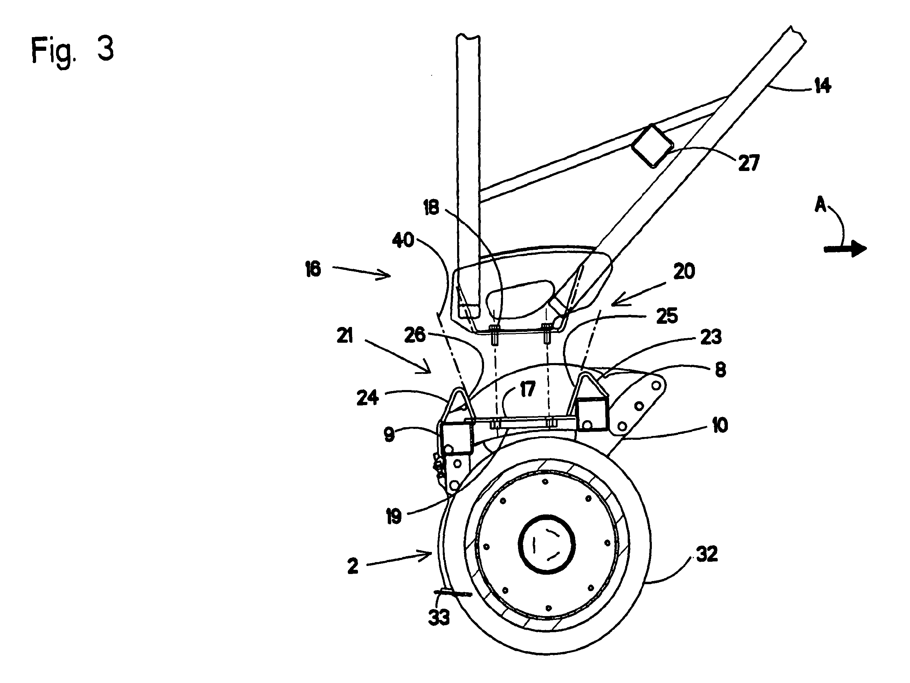

La figure 3 représente une vue selon la coupe III-III de la figure 2. La figure 3 illustre plus en détail une extrémité du châssis (5) avec le deuxième dispositif de guidage (21). Le deuxième dispositif de guidage (21) assiste le positionnement longitudinal du semoir (3) sur le châssis (5) pendant la deuxième étape dans une direction parallèle à la direction d'avance (A). Pour ce faire, l'agriculteur, sur son tracteur, avancera ou reculera quelque peu tout en relevant le système d'attelage trois points (4) afin d'obtenir un positionnement précis dans la direction d'avance (A). A cet effet, le deuxième dispositif de guidage (21) comporte une butée avant (23) et une butée arrière (24) au niveau du bras latéral (10). La butée avant (23) est liée à la première poutre (8) et la butée arrière (24) est liée à la deuxième poutre (9). Les butées avant et arrière (23, 24) comportent chacune au moins une face inclinée (25, 26). Lesdites faces inclinées (25, 26) réalisent ensemble une deuxième forme de Vé (40) ouvert vers le haut et dont la pointe est dirigée vers le bas. L'angle d'ouverture du deuxième Vé (40) est avantageusement compris entre 0° et 90°, d'une manière plus précise entre 30° et 50°. Au fur et à mesure que la structure latérale (14) s'engage dans le deuxième Vé (40), on obtient un positionnement précis de la structure latérale (14) sur la surface d'appui (17). Pour désaccoupler le semoir (3) de l'unité de travail (2), les différentes étapes sont réalisées dans l'ordre inverse à savoir : déverrouiller le verrou (19), mise en place des béquilles (41) maintenant le semoir (3), abaisser le dispositif de relevage du tracteur puis avancer.

Pour assurer un bon positionnement du semoir (3) sur le châssis (5), il est important de guider, d'abord le positionnement latéral dans une direction perpendiculaire à la direction d'avance (A), puis le positionnement longitudinal du semoir (3) dans la direction d'avance (A). De part la réalisation du premier et du deuxième dispositifs de guidage (20, 21), il y a d'abord un positionnement latéral via le premier dispositif de guidage (20), puis un positionnement longitudinal via le deuxième dispositif de guidage (21). D'une manière avantageuse, la somme des deux Vé (39, 40) du premier et du deuxième dispositifs de guidage (20, 21) réalise une forme tronconique qui réduit au fur et à mesure le jeu fonctionnel pour arriver à un positionnement précis du semoir (3) sur l'unité de travail (2). Le positionnement longitudinal ainsi que le positionnement latéral se fait progressivement au fur et à mesure que l'agriculteur relève le système d'attelage trois points (4) via le dispositif de relevage du tracteur.

Dans l'exemple de réalisation des figures 1 et 2, le cadre (13) de la trémie (11) comprend, en sus, une poutre longitudinale (27) dirigée sensiblement perpendiculairement à la direction d'avance (A). Cette poutre longitudinale (27) s'étend en dessous du cadre (13) et relie les deux structures latérales (14). Elle permet de rigidifier le cadre (13). Cette poutre longitudinale (27) est destinée à recevoir les béquilles (41) utilisées pour la position de remisage du semoir (3). La structure de liaison (15) du dispositif d'implantation de la semence dans le sol (12) prend appui sur ladite poutre longitudinale (27) au moyen d'au moins un point d'appui (28) et d'au moins un actionneur (42). D'une manière avantageuse, le châssis (5) comporte deux points d'appui (28) disposés de part et d'autre du plan vertical médian (29) du châssis (5). Chaque point d'appui (28) s'étend dans un plan vertical dirigé au moins sensiblement suivant la direction d'avance (A) et contenant un point d'attelage inférieur (6) correspondant. De part la position des deux points d'appui (28), les efforts transitent directement vers le système d'attelage trois points (4). Un actionneur (42) est articulé entre la structure de liaison (15) et le point d'appui (28) correspondant. Le dispositif d'implantation de semence dans le sol (12) est relevé dans sa position de transport et abaissé dans la position de travail au moyen des actionneurs (42).

La structure de liaison (15) est constituée d'un parallélogramme qui peut être déformé par un moyen de réglage tel qu'une vis de réglage (43). Cette vis de réglage (43) permet notamment le réglage de la pression de terrage, c'est-à-dire la pression qui appuie le dispositif d'implantation de la semence (12) dans le sol. La vis de réglage (43) est, par exemple, du type vis de 3^{ème} point. Avec une pression de terrage relativement élevée, on évite le pianotage du dispositif d'implantation de semence dans le sol (12) lorsque la vitesse d'avance est importante. Comme le dispositif d'implantation de semence dans le sol (12) est directement lié sur le châssis (5), le cadre (13) du semoir (3) ne se soulève pas.

D'une manière avantageuse, l'extrémité des points d'appui (28) destinée à recevoir la poutre longitudinale (27) présente une forme complémentaire à la poutre longitudinale (27). La poutre longitudinale (27) de section carrée est disposée de manière à ce qu'une seule arête soit orientée vers le bas. L'extrémité du point d'appui (28) présente donc une forme de Vé. Grâce à cette forme, les points d'appui (28) sont stables par rapport à la poutre longitudinale (27).

Selon l'exemple représenté, la trémie (11) présente une forme générale d'entonnoir. Elle s'étend principalement perpendiculairement à la direction d'avance (A). Pour rapprocher le centre de gravité du semoir (3) et par conséquent le centre de gravité de la combinaison de semis du système d'attelage trois points (4) du tracteur, la trémie (11) présente une forme particulière. La paroi arrière (30) de la trémie (11) est sensiblement verticale alors que la paroi avant (31) est inclinée et s'étend de préférence loin vers l'avant. Lorsque le semoir (3) est accouplé à l'unité de travail (2), la paroi arrière (30) de la trémie (11) ne dépasse pas au-delà du châssis (5). Cette forme particulière et cette position permettent d'obtenir une combinaison de semis (1) qui est compacte et dont le porte-à-faux est réduit. Ainsi le centre de gravité est particulièrement proche du système d'attelage (4), donc des roues arrière du tracteur.

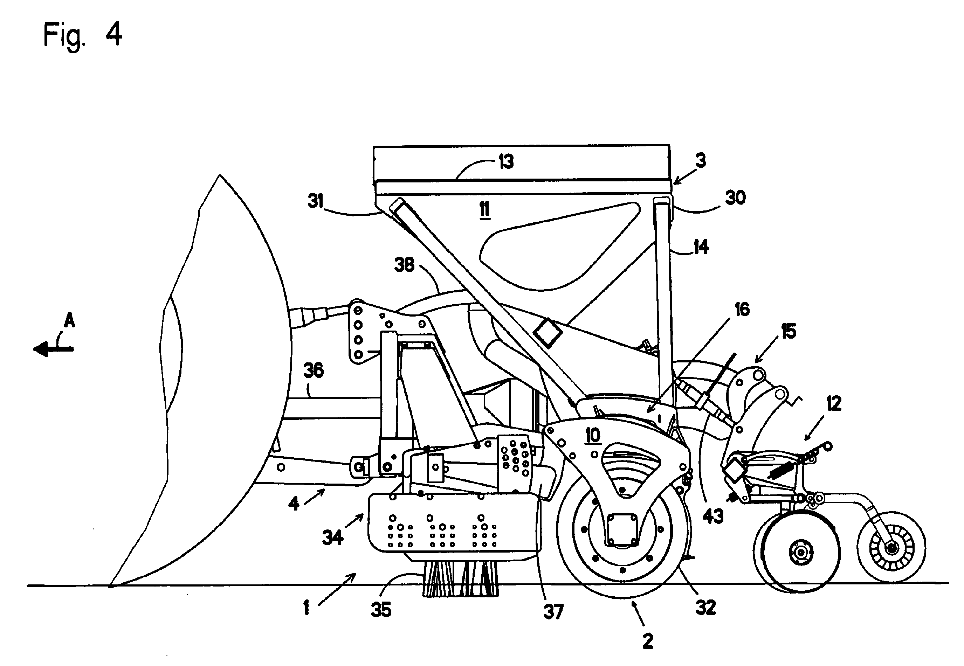

Dans l'exemple de réalisation supplémentaire représenté à la figure 4, la combinaison de semis est constituée par une machine de préparation d'un lit de semence (1) et un semoir (3). Il est courant d'utiliser un tel combiné de semis après les labours ou des déchaumages superficiels. A la lumière de la figure 4, la machine de préparation d'un lit de semence (1) comporte une herse rotative (34) associée à l'unité de travail (2). L'unité de travail (2) étant constituée d'un rouleau de rappuyage (32). La herse rotative (34) comporte des organes de travail animés (35) qui sont entraînés par l'intermédiaire d'un arbre de transmission à joints universels (36) du tracteur. Les organes de travail du sol (35), liés à des rotors, sont agencés sous une poutre support. Les rotors sont montés tournant autour d'axes dirigés vers le haut.

La herse rotative (34) est liée au châssis (5) au moyen d'au moins deux bielles (37). Dans la réalisation, une bielle (37) est disposée à chaque extrémité du châssis (5) et deux autres bielles (37) sont disposées de part et d'autre du plan vertical médian (29). Les points d'ancrage avant des quatre bielles (37) sont avantageusement alignés entre eux et les points d'ancrage arrière sont avantageusement alignés entre eux. Les quatre bielles (37) présentent donc la même longueur. La herse rotative (34) est encore liée au châssis (5) de l'unité de travail (2) au moyen de deux bielles supérieures (38). Les deux bielles supérieures (38) sont articulées à leurs deux extrémités. Afin d'adapter la profondeur de travail de la herse rotative (34), lesdites quatre bielles (37) forme avec les deux bielles supérieures (38) une liaison du type parallélogramme. Les quatre bielles (37) réalisent le bras inférieur du parallélogramme et les deux bielles supérieures (38) réalisent le bras supérieur du parallélogramme. Cette liaison du type parallélogramme permet de déplacer les organes de travail (35) parallèlement par rapport au sol. La profondeur de travail des organes de travail (35) est ainsi réglée par rapport au rouleau (32) via la liaison du type parallélogramme.

On remarque encore que les points d'appui (28) s'étendent dans un plan vertical contenant un des points d'attelage inférieurs (6) du système d'attelage trois points (4). Au transport, le semoir (3) s'appuie notamment sur les deux points d'appui (28) du châssis (5). Ainsi, une partie du poids du semoir (3) est reportée directement sur le chevalet de la herse rotative (34), lors du relevage de la machine combinée puis directement vers le système d'attelage trois points (4). Le châssis (5) et les bras latéraux (10) du rouleau sillonneur (32) ne sont donc pas directement sollicités et les efforts ne transitent donc pas par les bielles (37) et la poutre de la herse rotative (34).

L'agriculteur sera amené à utiliser la machine de préparation d'un lit de semence (1) et le semoir (3) de manière séparée lorsque la météorologie est particulièrement défavorable à la période des semis. Dans de telles conditions de travail difficiles, notamment humides, la terre restant collée, elle génère des bourrages et un mauvais fonctionnement du semoir (3). Il optera alors pour une préparation du lit de semence séparée du semis et désaccouplera le semoir (3). Il effectuera la préparation du lit de semence lors d'un premier passage et l'opération de semis sera effectuée dans un second passage lorsque la terre sera ressuyée. Le semis pouvant alors être réalisé à grande vitesse. Si les conditions de travail s'améliorent ou s'il change de parcelle, l'agriculteur préférera alors à nouveau utiliser la machine de préparation d'un lit de semence (1) combinée avec le semoir (3). Il lui faudra donc accoupler le semoir (3) à la machine de préparation d'un lit de semence (1) via les mécanismes d'accouplement (16). Le combiné de semis est donc modulable en fonction des besoins de l'agriculteur.

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection.

Il est envisageable que le châssis (5) ne comporte qu'une seule poutre.

La présente invention concerne également une combinaison de semis dont les dispositifs de guidage (20, 21) de chaque mécanisme d'accouplement (16) présentent une forme de Vé (39, 40) inversée par rapport aux modes de réalisations décrits. Ainsi, les Vé (39, 40) des deux dispositifs de guidage (20, 21) présentent leurs ouvertures vers le bas et leurs pointes vers le haut.

## Revendications

1. Machine combinée, notamment un combiné de semis destiné à être accouplé à un tracteur via un système d'attelage trois points (4), ledit combiné de semis est constitué par la combinaison d'une machine de préparation d'un lit de semence (1) comportant une unité de travail (2) et un semoir (3), l'unité de travail (2) porte intégralement le semoir (3) au moyen d'un châssis (5), ledit semoir (3) comportant une trémie (11) et un dispositif d'implantation de la semence dans le sol (12), le semoir (3) étant lié audit châssis (5) au moyen de deux mécanismes d'accouplement (16) disposés de part et d'autre du châssis (5), chaque mécanisme d'accouplement (16) comporte au moins un dispositif de guidage (20, 21) pour le positionnement du semoir (3) sur le châssis (5), ***caractérisée par le fait* que** le châssis comporte deux poutres (8, 9) disposées l'une (8) derrière l'autre (9) et que chaque mécanisme d'accouplement (16) comporte un premier dispositif de guidage (20) pour le positionnement latéral au moyen d'une paroi inclinée (22) et un deuxième dispositif de guidage (21) pour le positionnement longitudinal au moyen d'une butée avant (23) liée à la première poutre (8) et d'une butée arrière (24) liée à la deuxième poutre (9).

2. Machine selon la revendication 1, ***caractérisée par le fait* que** ledit positionnement latéral et/ou le positionnement longitudinal se précise au fur et à mesure de l'actionnement dudit système d'attelage (4) via le dispositif de relevage du tracteur.

3. Machine selon la revendication 1 ou 2, ***caractérisée par le fait* que** ledit premier dispositif de guidage (20) permet un positionnement du semoir (3) par rapport au châssis (5) dans une direction perpendiculaire à la direction d'avance (A) au moyen de la paroi inclinée (22).

4. Machine selon l'une quelconque des revendications 1 à 3, ***caractérisée par** le fait* les deux parois inclinées (22) ensemble forment une première forme de Vé (39).

5. Machine selon l'une quelconque des revendications 1 à 4, ***caractérisée par le fait* que** ledit deuxième dispositif de guidage (21) permet un positionnement du semoir (3) par rapport au châssis (5) dans une direction parallèle à la direction d'avance (A) au moyen des butées (23, 24).

6. Machine selon l'une quelconque des revendications 1 à 5, ***caractérisée par**le fait* que l'association de la butée avant (23) et la butée arrière (24) forme une deuxième forme de Vé (40) dont l'ouverture est dirigée vers le haut.

7. Machine selon les revendications 4 et 6, ***caractérisée par le fait* que** la somme de la première forme de Vé (39) et de la deuxième forme de Vé (40) réalise une forme tronconique qui assure un positionnement précis du semoir (3) par rapport au châssis (5) de l'outil de travail (2).

8. Machine selon l'une quelconque des revendications 1 à 7, ***caractérisée par le fait* que** chaque mécanisme d'accouplement (16) est sécurisé par l'intermédiaire d'un moyen de liaison composé d'au moins une vis (18) et d'au moins un verrou (19).

9. Machine agricole selon l'une quelconque des revendications 1 à 8, ***caractérisée par le fait* que** la trémie (11) est soutenue par un cadre (13), au moins une structure latérale (14) et une poutre longitudinale (27) s'étendant sous le cadre (13).

10. Machine selon l'une quelconque des revendications 1 à 9, ***caractérisée par le fait* que** le châssis (5) comporte au moins un point d'appui (28) qui s'étend dans un plan vertical contenant un point d'attelage inférieur (6) correspondant.

## Claims

1. Combined machine, in particular a sowing combination intended to be coupled to a tractor via a three-point hitching system (4), the said sowing combination is constituted by the combination of a seed bed preparation machine (1) comprising a working unit (2) and a seed drill (3), the working unit (2) carries integrally the seed drill (3) by means of a chassis (5), the said seed drill (3) comprising a hopper (11) and a device for planting seed in the soil (12), the seed drill (3) being linked to the said chassis (5) by means of two coupling mechanisms (16) arranged on either side of the chassis (5), each coupling mechanism (16) comprises at least one guiding device (20, 21) for the positioning of the seed drill (3) on the chassis (5), ***characterized in* that** the chassis comprises two beams (8, 9) arranged one (8) behind the other (9) and **in that** each coupling mechanism (16) comprises a first guiding device (20) for the lateral positioning by means of an inclined wall (22) and a second guiding device (21) for the longitudinal positioning by means of a front stop (23) linked to the first beam (8) and a rear stop (24) linked to the second beam (9).

2. Machine according to Claim 1, ***characterized in* that** the said lateral positioning and/or the longitudinal positioning becomes precise as the actuating of the said hitching system (4) proceeds via the lifting device of the tractor.

3. Machine according to Claim 1 or 2, ***characterized in* that** the said first guiding device (20) allows a positioning of the seed drill (3) with respect to the chassis (5) in a direction perpendicular to the advance direction (A) by means of the inclined wall (22).

4. Machine according to any one of Claims 1 to 3, ***characterized in* that** the two inclined walls (22) together form a first V shape (39).

5. Machine according to any one of Claims 1 to 4, ***characterized in* that** the said second guiding device (21) allows a positioning of the seed drill (3) with respect to the chassis (5) in a direction parallel to the advance direction (A) by means of stops (23, 24).

6. Machine according to any one of Claims 1 to 5, ***characterized in* that** the association of the front stop (23) and the rear stop (24) forms a second V shape (40), the opening of which is directed upwards.

7. Machine according to Claims 4 and 6, ***characterized in* that** the sum of the first V shape (39) and of the second V shape (40) realizes a shape in the form of a truncated cone, which ensures a precise positioning of the seed drill (3) with respect to the chassis (5) of the working tool (2).

8. Machine according to any one of Claims 1 to 7, ***characterized in* that** each coupling mechanism (16) is secured by means of a connecting means composed of at least one screw (18) and at least one bolt (19).

9. Agricultural machine according to any one of Claims 1 to 8, ***characterized in* that** the hopper (11) is supported by a frame (13), at least one lateral structure (14) and a longitudinal beam (27) extending beneath the frame (13).

10. Machine according to any one of Claims 1 to 9, ***characterized in* that** the chassis (5) comprises at least one support point (28) which extends in a vertical plane containing a corresponding lower hitching point (6).

## Patentansprüche

1. Kombinationsmaschine, insbesondere Bestellkombination, die dazu bestimmt ist, an einen Traktor über ein Dreipunktanhängesystem (4) angekuppelt zu werden, wobei die Bestellkombination in der Kombination einer Maschine zur Vorbereitung eines Saatbettes (1) mit einer Arbeitseinheit (2) und einer Sämaschine (3) besteht, wobei die Arbeitseinheit (2) die Sämaschine (3) mittels eines Rahmens (5) vollständig trägt, wobei die Sämaschine (3) einen Trichter (11) und eine Vorrichtung zum Einsetzen des Saatguts in den Boden (12) umfasst, wobei die Sämaschine (3) mit dem Rahmen (5) mittels von zwei Kupplungsmechanismen (16) verbunden ist, die beiderseits des Rahmens (5) angeordnet sind, wobei jeder Kupplungsmechanismus (16) mindestens eine Führungsvorrichtung (20, 21) zur Positionierung der Sämaschine (3) auf dem Rahmen (5) umfasst, ***dadurch gekennzeichnet,* dass** der Rahmen zwei Träger (8, 9), die hintereinander (8, 9) angeordnet sind, umfasst *und* dass jeder Kupplungsmechanismus (16) eine erste Führungsvorrichtung (20) zur seitlichen Positionierung mittels einer geneigten Wand (22) und eine zweite Führungsvorrichtung (21) zur Längspositionierung mittels eines vorderen Anschlags (23), der mit dem ersten Träger (8) verbunden ist, und eines hinteren Anschlags (24), der mit dem zweiten Träger (9) verbunden ist, umfasst.

2. Maschine nach Anspruch 1, ***dadurch gekennzeichnet,* dass** die Seiten- und/oder Längspositionierung sich nach und nach der Betätigung des Anhängesystems (4) über die Hubvorrichtung des Traktors präzisiert.

3. Maschine nach Anspruch 1 oder 2, ***dadurch gekennzeichnet,* dass** die erste Führungsvorrichtung (20) eine Positionierung der Sämaschine (3) in Bezug zum Rahmen (5) in eine Richtung senkrecht zur Vorschubrichtung (A) mittels der geneigten Wand (22) ermöglicht.

4. Maschine nach irgend einem der Ansprüche 1 bis 3, ***dadurch gekennzeichnet,* dass** die beiden geneigten Wände (22) gemeinsam eine erste V-Form (39) bilden.

5. Maschine nach irgend einem der Ansprüche 1 bis 4, ***dadurch gekennzeichnet,* dass** die zweite Führungsvorrichtung (21) eine Positionierung der Sämaschine (3) in Bezug zum Rahmen (5) in eine Richtung parallel zur Vorschubrichtung (A) mittels der Anschläge (23, 24) ermöglicht.

6. Maschine nach irgend einem der Ansprüche 1 bis 5, ***dadurch gekennzeichnet,* dass** die Verbindung des vorderen Anschlags (23) und des hinteren Anschlags (24) eine zweite V-Form (40) bildet, deren Öffnung nach oben gerichtet ist.

7. Maschine nach den Ansprüchen 4 und 6, ***dadurch gekennzeichnet,* dass** die Verbindung der ersten V-Form (39) und der zweiten V-Form (40) eine Kegelstumpfform bildet, die eine genaue Positionierung der Sämaschine (3) in Bezug zum Rahmen (5) des Arbeitswerkzeugs (2) gewährleistet.

8. Maschine nach irgend einem der Ansprüche 1 bis 7, ***dadurch gekennzeichnet,* dass** jeder Kupplungsmechanismus (16) mittels eines aus mindestens einer Schraube (18) und mindestens einem Riegel (19) gebildeten Verbindungsmechanismus gesichert ist.

9. Landwirtschaftliche Maschine nach irgend einem der Ansprüche 1 bis 8, ***dadurch gekennzeichnet,* dass** der Trichter (11) von einem Gestell (13), mindestens einer seitlichen Struktur (14) und einem Längsträger (27), der sich unter dem Gestell (13) erstreckt, getragen wird.

10. Maschine nach irgend einem der Ansprüche 1 bis 9, ***dadurch gekennzeichnet,* dass** der Rahmen (5) mindestens einen Auflagepunkt (28) umfasst, der sich in einer Vertikalebene erstreckt, die einen entsprechenden unteren Anhängepunkt (6) enthält.
